Europäisches Patentamt

**European Patent Office**

Office européen des brevets

(19)

(11) Numéro de publication: **0 063 521**
**B1**

(12) ## FASCICULE DE BREVET EUROPEEN

(45) Date de publication du fascicule du brevet:
**02.10.85**

(51) Int. Cl.⁴: **B 61 D 45/00,** B 61 D 3/08,
B 61 D 3/20, B 60 P 7/13

(21) Numéro de dépôt: **82400660.5**

(22) Date de dépôt: **13.04.82**

(54) **Wagon plat adapté au transport de carrosseries routières amovibles.**

(30) Priorité: **17.04.81 FR 8107786**

(43) Date de publication de la demande:
**27.10.82 Bulletin 82/43**

(45) Mention de la délivrance du brevet:
**02.10.85 Bulletin 85/40**

(84) Etats contractants désignés:
**BE CH DE GB IT LI**

(56) Documents cités:
**FR - A - 2 212 249**
**GB - A - 597 557**
**US - A - 2 540 207**
**US - A - 3 079 874**
**US - A - 3 788 498**

(73) Titulaire: **ATELIER BRETON DE REPARATION FERROVIAIRE par abréviation A.B.R.F. Société Anonyme dite:, Rue Lafayette Zone Industrielle, F-44110 Chateaubriant (FR)**

(72) Inventeur: **Andrivet, Guy, Domaine de la Chataigneraie La Butte des Ridais, F-44110 Erbray (FR)**
Inventeur: **Noyon, Gustave, 7 Allée de la Grotte, F-93160 Noisy-le-Grand (FR)**

(74) Mandataire: **Caunet, Jean et al, Cabinet BEAU DE LOMENIE 55, rue d'Amsterdam, F-75008 Paris (FR)**

BUNDESDRUCKEREI BERLIN

## Description

Un procédé de coordination technique rail-route en plein développement concerne les caisses mobiles. Il consiste à transporter sur des wagons plats des carrosseries routières amovibles. Le transfert wagon/semi-remorque et réciproquement est généralement effectué à l'aide d'un portique équipé de pinces.

Les techniques actuellement connues présentent deux inconvénients importants:

— les carrosseries routières sont prévues pour supporter vers l'avant les décélérations horizontales dues au freinage. Ces décélérations sont très faibles comparées à celles observées dans les triages ferroviaires. Elles ne sont donc pas aptes à passer au triage;

— les carrosseries routières de hauteur normale posées sur un wagon plat engagent le gabarit normal à sa partie haute. Elles ne peuvent donc être transportées par fer que sur les lignes bénéficiant d'un grand gabarit.

Du fait de ces deux inconvénients les caisses mobiles ne sont exploitées que par trains complets, ce qui évite tout passage au triage, et sur les grands axes qui bénéficient d'un gabarit plus important que le gabarit normal.

La présente invention a pour but, d'une façon générale, de remédier à ces inconvénients en adaptant sans modifications importantes, un wagon plat au transport des carrosseries routières amovibles et de telle façon que celles-ci n'aient pas à être renforcées pour passer au triage, ni à être diminuées en hauteur pour passer au gabarit.

Dans ces conditions, la coordination technique rail-route devient accessible au trafic diffus avec passage au triage et peut emprunter toutes les lignes ferroviaires et notamment les lignes transversales à gabarit limité.

Or, le certificat d'addition français n° 2 212 249 montre qu'il est connu de maintenir sur un wagon plat un chargement constitué par une pluralité de colis fragiles déposés les uns à côté des autres et éventuellement les uns au-dessus des autres. Pour caler et arrimer le chargement dans son ensemble, ce document prévoit que le châssis du wagon est rigidement solidaire, à chacune de ses extrémités longitudinales, de montants sur lesquels une paroi est fixée et reliée à une joue mobile par l'intermédiaire d'un mécanisme d'écartement. Ces montants extrêmes sont aptes à supporter les décélérations au triage et les joues règlables permettent de coincer les colis pour qu'ils ne bougent pas lors du transport.

Mais ce document n'enseigne pas que le wagon considéré peut être utilisé pour le chargement et le transport d'une carrosserie routière. Il n'enseigne pas davantage, dans l'hypothèse où tel chargement aurait été envisagé, comment la carrosserie routière prévue pour subir au plus des décélérations de 0,6 g dans des conditions normales de circulation sur route, pourrait sur ce wagon résister à des décélérations qui, au tamponnement dans le triage ferroviaire, peuvent atteindre 10 g.

Le brevet US n° 2 540 207 décrit des moyens d'arrimage des colis dans un wagon. Ils comportent des glissières verticales dans lesquelles sont montés coulissants et pivotants des bras destinés à recevoir des cales déplaçables. Ces cales sont blocables en position par des taquets coinceurs coopérant avec des crémaillères qui s'étendent à l'intérieur des bras. Si les taquets coinceurs sont, en position de blocage, partiellement noyés dans les bras, par contre les moyens d'arrimage dans leur ensemble (bras, cales et taquets) font saillie, en position d'attente, dans le wagon. En supposant que le toit du wagon puisse être démonté et que les colis soient chargés par le haut, il est évident que ces moyens d'arrimage constituent une gêne, du fait qu'ils sont saillants, pour la descente et le centrage des colis.

La présente invention vise à atteindre le but général précité en perfectionnant le wagon de l'addition française n° 2 212 249, compte tenu de l'enseignement apporté par le brevet US n° 2 540 207, de telle façon:

— que les carrosseries routières ne soient pas en elle-mêmes renforcées et conservent, par conséquent, leur charge utile et leur capacité de chargement (gabarit routier) pour stabiliser le coût du transport routier.

— que ces carrosseries routières supportent malgré cela les décélérations importantes aux tamponnages en triage, leur chargement se trouvant alors protégé contre les chocs,

— et que lesdites carrosseries routières puissent être chargées et déchargées des wagons sans difficultés par des moyens de manutention verticale.

Le wagon perfectionné comporte donc des montants extrêmes qui coopèrent avec un élément de butée déplaçable.

Pour atteindre ce but précité et conformément à l'invention, l'élément de butée est constitué par une pluralité d'organes de verrouillage distincts répartis en hauteur par groupes d'au moins deux organes sur les montants considérés; ces organes de butée et de verrouillage sont escamotables dans les montants pour qu'en position effacée, les montants permettent le centrage par le haut des extrémités frontales (parois fixes ou portes) d'une carrosserie routière amovible et qu'en position saillante, les organes escamotables de butée et de verrouillage s'opposant par lesdits montants qui supportent notamment les efforts de tamponnage au triage, à toute déformation de la carrosserie routière; et lesdits organes escamotables de butée et de verrouillage de chaque montant sont conjugués entre eux, leur commande commune étant placée, de même que celle des organes des autres montants, sous la dépendance sélective d'actionnement de la carrosserie amovible considérée au cours de sa descente.

De préférence, des rampes inclinées de centrage longitudinal et/ou transversal sont interposées entre les éléments résistants du wagon et ceux de la carrosserie amovible pour intervenir au cours de la descente de celle-ci.

Selon une technique mécanique, les organes escamotables de butée et de verrouillage de chaque montant sont constitués par des leviers montés pivotants sur le montant et susceptibles d'occuper une position inclinée d'escamotage et une position sensiblement perpendiculaire de blocage, ces leviers étant reliés entre eux par au moins une bielle d'accouplement et à une pédale de commande par une bielle de transmission, pédale dont l'extrémité saillante est toujours située sur la trajectoire de descente de la carrosserie amovible.

Suivant une première forme de réalisation, pour chaque montant, une bielle unique assure la liaison cinématique entre les leviers et la pédale, les axes de pivotement des leviers et pédale étant situés entre les extrémités d'intervention de ces derniers et les axes d'articulation de la bielle, tous ces axes étant répartis pour constituer des parallélogrammes déformables.

Suivant une deuxième forme de réalisation, pour chaque montant, des bielles d'accouplement relient deux à deux les leviers entre leurs extrémités d'intervention et leurs axes de pivotement, une bielle de transmission reliant la pédale de commande et l'un quelconque des leviers, également entre leurs extrémités d'intervention et leurs axes de pivotement.

Dans les deux cas, chaque extrémité frontale de la carrosserie amovible considérée comporte des raidisseurs verticaux et horizontaux, les leviers pivotants de chaque montant étant situés en regard d'un raidisseur vertical.

Par ailleurs, l'écartement hors tout des brancards longitudinaux du wagon est inférieur à la distance libre entre les longerons de la carrosserie amovible considérée, de façon que les traverses de celle-ci puissent reposer sur lesdits brancards en-dessous du niveau desquels lesdits longerons peuvent prendre place pour diminuer le gabarit ferroviaire.

Divers autres caractéristiques et avantages de l'invention ressortent d'ailleurs de la description détaillée qui suit.

Des formes de réalisations de l'objet de l'invention sont représentées, à titre d'exemples non limitatifs, sur le dessin annexé.

Sur ce dessin:

— la figure 1 est une élévation longitudinale montrant un wagon chargé d'une caisse mobile,

— la figure 2 est une vue analogue à la figure 1 illustrant ce wagon sans caisse mobile,

— la figure 3 représente à plus grande échelle, une première forme de réalisation du détail »A« de la figure 1.

— la figure 4 est une coupe prise suivant la ligne IV-IV de la figure 3.

— la figure 5 est une vue analogue à la figure 4 faisant ressortir une variante d'exécution,

— la figure 6 est une coupe partielle prise, à plus grande échelle, suivant la ligne VI-VI de la figure 1.

— la figure 7 est une vue analogue à la figure 3 montrant une deuxième forme de réalisation du dispositif de butée et de verrouillage.

— les figures 8 et 9 sont des vues analogues aux figures 4 et 5 concernant les deux modes d'exécution précités, mais prises suivant la ligne VIII-VIII de la figure 7.

Le wagon comprend un châssis plat 1 présentant des brancards longitudinaux 2 reliés entre eux, notamment à leurs extrémités, par des traverses d'attelage 3, ce châssis étant supporté par des essieux 4.

Chaque traverse d'attelage 3 de ce châssis est rendue solidaire, de façon définitive ou démontable, d'au moins deux montants 5 aptes à résister aux décélérations au triage d'une carrosserie amovible 6 destinée à être descendue entre les montants des deux extrémités, posée sur les brancards 2 et maintenue en place par des organes de butée et de verrouillage, intégrés auxdits montants et décrits dans ce qui suit.

La carrosserie amovible 6 comprend un châssis 7 avec plancher 8, ce châssis comportant des traverses 9 solidaires de longerons extérieurs 10. Le châssis 7 est équipé de parois longidutinales 11 et d'une toiture 12, ainsi que d'extrémités frontales pleines 13, telles que les parois fixes ou des portes ouvrantes.

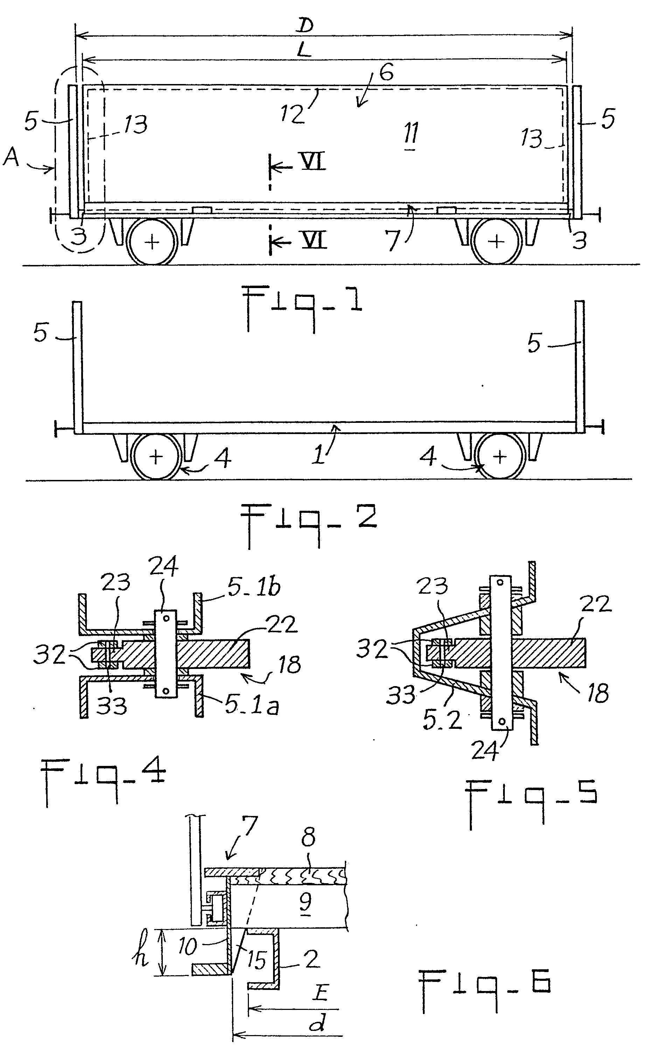

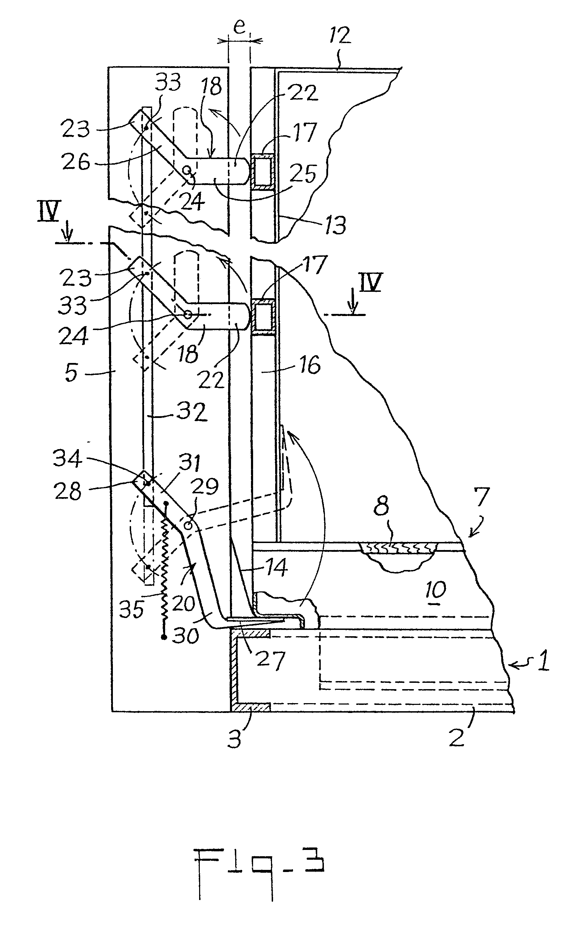

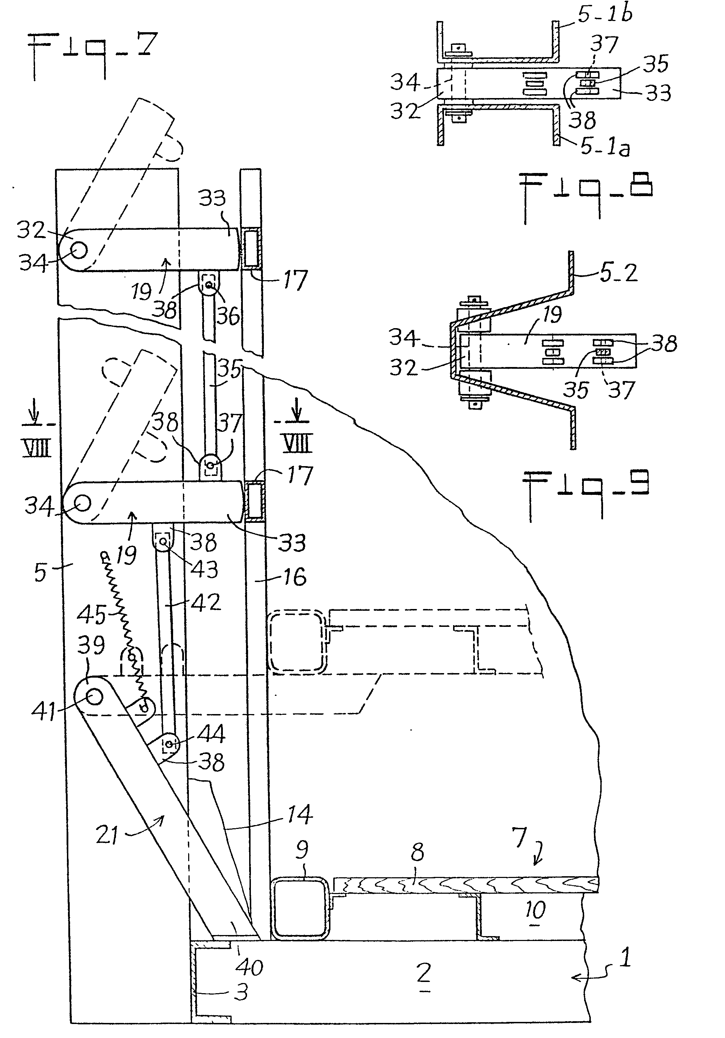

Ainsi que cela ressort des figures 1 et 3, la longueur hors tout »L« de la carrosserie amovible 6 est inférieure à la distance libre »D« entre les montants extrêmes 5; ainsi, un jeu »e« existe entre les montants 4 de chaque extrémité et la paroi (ou porte) 13 correspondante, ce jeu permettant non seulement de descendre facilement une carrosserie amovible 6 et de la mettre en place sur le châssis 1 du wagon, mais également de manœuvrer les organes de butée et de verrouillage précités.

Pour faciliter le centrage longitudinal de la carrosserie amovible, les montants 5 sont solidaires de rampes inclinées 14 susceptibles de coopérer, lors de la descente de cette carrosserie et en assistance avec lesdits organes de butée pendant leur mouvement de blocage, avec les traverses extrêmes 9 du châssis 7 de ladite carrosserie.

Pendant que ce centrage longitudinal s'opère, le centrage transversal s'effectue concomitamment; en effet, les longerons 10 du châssis 7 de la carrosserie amovible sont solidaires de rampes inclinées 15 (figure 6) susceptibles de coopérer avec les brancards 2 du châssis 1 du wagon.

D'ailleurs, il est important de remarquer (figure 6) que l'écartement hors tout »E« (figure 6) des brancards 2 est légèrement inférieur à la distance libre »d« entre les longerons 10; ainsi, les traverses 9 de la carrosserie amovible 6 peuvent reposer sur les brancards 2 et les longerons 10 peuvent descendre plus bas que ceux-ci, ce qui permet d'augmenter de »h« la hauteur de la carrosserie amovible sans engager le gabarit ferroviaire.

En outre, les extrémités frontales 13 de la carrosserie amovible, qu'elles soient constituées par des parois fixes ou des portes ouvrantes, comportent des raidisseurs verticaux 16 et des raidisseurs horizontaux 17 solidaires entre eux et destinés à renforcer lesdites extrémités sans accroissement notable de leur épaisseur. Les raidisseurs verticaux 16 coopèrent avec les organes de butée et de verrouillage précités.

Normalement, ces organes sont escamotés et libèrent complètement l'espace libre existant entre les montants 5 afin qu'une carrosserie amovible 6 puisse aisément y prendre place. Mais, lorsque celle-ci se trouve convenablement positionnée sur le châssis 1 du wagon, lesdits organes sont actionnés pour occuper une position de blocage dans laquelle ils butent contre les raidisseurs verticaux 16 et enserrent la carrosserie amovible 6 qui fait alors parfaitement corps avec le wagon équipé de ses montants, ladite carrosserie se trouvant alors soustraite aux effets particulièrement néfastes des décélérations intenses au triage.

Les organes escamotables de butée et de verrouillage de chaque montant 5 sont conjugués entre eux; ils peuvent être de n'importe quel type et constitués par exemple par des poussoirs hydrauliques ou pneumatiques branchés sur une alimentation commune, ou bien par des vérins électriques connectés sur la même ligne d'excitation ou encore par des leviers pivotants 18 (figures 3 à 5) ou 19 (figures 7 à 9) ou autres organes mécaniques.

Par ailleurs, la commande commune des organes escamotables de butée et de verrouillage d'un même montant est placée, de même que celle des organes des autres montants, sous la dépendance sélective d'actionnement de la carrosserie amovible 6 au cours de sa descente. Ainsi, un distributeur, disposé au pied de chaque montant et à l'aplomb de cette carrosserie, est relié aux poussoirs hydrauliques ou pneumatiques du montant considéré; de même, un contacteur relié aux vérins électriques de chaque montant et situé au pied de celui-ci est susceptible d'être commandé directement par ladite carrosserie; de même encore, une pédale mécanique 20 (figures 3 à 5) ou 21 (figures 7 à 9) articulée au pied de chaque montant et accouplée aux leviers de ce dernier s'étend sous la carrosserie pour être actionnée par elle.

Deux formes de réalisation de l'équipement mécanique d'un montant 5 sont illustrées par les figures 3 à 5 et respectivement les figures 7 à 9. Qu'il s'agisse de l'une ou de l'autre, chaque montant peut être constitué soit par deux profilés en U (figures 4 et 8) 5.1a et 5.1b rigidement entretoisés et entre les âmes desquels, sont disposés les leviers 18 et la pédale 20, soit par un profilé en oméga (figures 5 et 9) 5.2a entre les branches inclinées, duquel les mêmes organes se trouvent placés.

Suivant la première forme de réalisation (figures 3 à 5), chaque levier 18 est monté pivotant, entre son extrémité d'actionnement par butée 22 et son extrémité de commande 23, autour d'un axe 24 du montant 5. Les leviers présentent une forme en V telle que:

— dans la position de blocage représentée en trait plein, la branche d'actionnement 25 est sensiblement perpendiculaire au montant et fait saillie de celui-ci, tandis que la branche de commande 26 est inclinée vers le haut,

— dans la position d'escamotage représentée en trait interrompu, la branche d'actionnement 25 est sensiblement parallèle au montant et effacée dans celui-ci, tandis que la branche de commande 26 est inclinée vers le bas.

La pédale 20 est également montée pivotante, entre son extrémité menante 27 susceptible de coopérer avec la traverse 9 correspondante de la carrosserie amovible 6 et son extrémité menée de commande 28, autour d'un axe 29 du montant 5. Elle présente une forme doublement cambrée telle que:

— dans la position de blocage représentée en trait plein, l'extrémité menante 27 prise sous la traverse 9 est sensiblement horizontale et la branche d'actionnement 30 est inclinée vers le bas, tandis que la branche de commande 31 est, comme les autres, inclinée vers le haut.

— dans la position d'escamotage représentée en trait interrompu, la branche d'actionnement 31 est faiblement inclinée vers le haut pour que l'extrémité menante 27 toujours située sous la traverse 9 soit sensiblement verticale, tandis que la branche de commande 31 est, comme les autres, inclinée vers le bas.

Pour assurer la liaison cinématique entre les leviers 18 et la pédale 20, tous les axes de pivotement 24 et 29 sont situés sur la même ligne droite et les branches de commande 26 et 31 sont reliées entre elles au moyen d'une bielle unique de transmission 32 articulée par des axes 33 et 34 respectivement sur les extrémités de commande 23 et 28 des leviers et pédale afin de constituer un ensemble de parallélogrammes déformables.

Un ressort 35 est accroché sur le montant 5 et la branche de commande 31 de la pédale 20 pour tendre à ramener tout l'équipement de la position de blocage positif (trait plein) vers la position d'escamotage (trait interrompu).

Suivant la deuxième forme de réalisation (figures 7 à 9), chaque levier 19 est monté pivotant, à son extrémité 32 opposée à son extrémité d'actionnement 33, autour d'un axe 34 du montant. Les leviers 19 sont reliés deux à deux par une bielle d'accouplement 35 articulée autour d'axes 36, 37 traversant des chapes 38 de ces leviers et situés près des extrémités d'actionnement 33 de ceux-ci.

Les leviers 19 et leurs bielles d'accouplement 35 sont alors susceptibles d'occuper les positions précitées de blocage en trait plein et d'escamotage en trait interrompu.

Comme ces leviers, la pédale 21 est rectiligne et montée pivotante, à son extrémité 39 opposée à son extrémité menante 40, autour d'un axe 41 du montant. Elle est reliée au levier 19 le plus bas, par une bielle de transmission 42 articulée autour d'axes 43, 44 traversant des chapes 38 de ce levier et de cette pédale et situés sensiblement à mi-longueur. En outre, un ressort 45 est accroché sur le montant 5 et ladite pédale pour tendre à ramener tout l'équipement de la position de blocage positif (trait plein) vers la position d'escamotage (trait interrompu).

Dans cette deuxième forme de réalisation, la pédale 21 se présente sous une meilleure incidence relativement à la carrosserie amovible 6 au cours de sa descente; de plus, les axes 34 et 41 n'étant pas situés sur la même verticale, la pédale 21 et les leviers 19 n'ayant pas la même longueur, la bielle de transmission 42 et les bielles d'accouplement 35 étant distinctes et articulées avec des bras de leviers différents sur les organes qu'elles relient, la vitesse angulaire de la pédale est elle-même différente de celle des leviers et la loi de variation peut très aisément être maitrisée et adaptée au serrage recherché.

L'invention n'est pas limitée aux formes de réalisation représentées et décrites en détail, car diverses modifications peuvent y être apportées sans sortir de son cadre.

## Revendications

1. Wagon plat adapté au transport de carrosseries routières amovibles dont les extrémités frontales (parois ou portes) sont trop faibles pour supporter les décélérations importantes des triages ferroviaires, le châssis (1) du wagon étant rigidement solidaire, à chacune de ses extrémités longitudinales, d'au moins deux montants (5) aptes à supporter les décélérations au triage, la distance libre (D) entre deux montants conjugués opposés longitudinalement étant supérieure à la longueur hors tout (L) du chargement et ces montants coopérant avec un élément de butée déplaçable pour emprisonner en le pressant ledit chargement, ce wagon étant caractérisé:
— en ce que l'élément de butée est constitué par une pluralité d'organes de verrouillage distincts (18, 19) répartis en hauteur par groupes d'au moins deux organes sur les montants considérés,
— en ce que ces organes de butée et de verrouillage sont escamotables dans les montants pour qu'en position effacée, les montants permettent le centrage par le haut des extrémités frontales (13) (parois fixes ou portes) d'une carrosserie routière amovible (6) et qu'en position saillante, les organes escamotables de butée et de verrouillage (18, 19) s'opposent par lesdits montants qui supportent notamment les efforts de tamponnage au triage, à toute déformation de la carrosserie routière,
— et en ce que lesdits organes escamotables de butée et de verrouillage (18, 19) de chaque montant sont conjugués entre eux (32, 35), leur commande commune étant placée, de même que celle des organes des autres montants, sous la dépendance sélective d'actionnement de la carrosserie amovible considérée au cours de sa descente.

2. Wagon selon la revendication 1 caractérisé en ce que des rampes inclinées de centrage longitudinal (14) et/ou transversal (15) sont interposées entre les éléments résistants du wagon et ceux de la carrosserie amovible pour intervenir au cours de la descente de celle-ci.

3. Wagon selon la revendication 1 ou 2, caractérisé en ce que les organes escamotables de butée et de verrouillage de chaque montant (5) sont constitués par des leviers (18, 19) montés pivotants sur le montant et susceptibles d'occuper une position inclinée d'escamotage et une position sensiblement perpendiculaire de blocage, ces leviers étant reliés entre eux par au moins une bielle d'accouplement (32, 35), et à une pédale de commande (20, 21) par une bielle de transmission (32, 42), pédale dont l'extrémité saillante (27, 40) est toujours située sur la trajectoire de descente de la carrosserie amovible.

4. Wagon selon la revendication 3, caractérisé en ce que, pour chaque montant, une bielle unique (32), assure la liaison cinématique entre les leviers (18) et la pédale (20), les axes de pivotement (24, 29) des leviers et pédale étant situés entre les extrémités d'intervention (22, 27) de ces derniers et les axes d'articulation (33, 34) de la bielle, tous ces axes étant répartis pour constituer des parallélogrammes déformables.

5. Wagon selon la revendication 3, caractérisé en ce que, pour chaque montant, des bielles d'accouplement (35) reliant deux à deux les leviers (19) entre leurs extrémités d'intervention (33) et leurs axes de pivotement (34), une bielle de transmission (42) reliant la pédale de commande (21) et l'un quelconque des leviers, également entre leurs extrémités d'intervention et leurs axes de pivotement (34, 41).

6. Wagon selon la revendication 4 ou 5, caractérisé en ce qu'un organe élastique (35, 45) est accroché entre chaque montant (5) et l'un des éléments (leviers 18, 19, ou pédale 20, 21) pivotants pour les ramener en position inclinée dite d'escamotage pour les leviers.

7. Wagon selon l'une quelconque des revendications 3 à 6, caractérisé en ce que chaque extrémité frontale (13) de la carrosserie amovible considérée (6) comporte des raidisseurs verticaux (16) et horizontaux (17), les leviers pivotants (18, 19) de chaque montant étant situés en regard d'un raidisseur vertical (16).

8. Wagon selon la revendication 1, caractérisé en ce que l'écartement hors tout (E) de ses brancards longitudinaux (2) est inférieur à la distance libre (d) entre les longerons (10) de la carrosserie amovible (6) considérée, de façon que les traverses (9) de celle-ci puissent reposer sur lesdits brancards en dessous du niveau desquels lesdits longerons peuvent prendre place pour diminuer le gabarit ferroviaire.

## Patentansprüche

1. Flachwagen für den Transport von abnehmbaren Straßenfahrzeugaufbauten, deren stirnseitige Enden (Wände oder Türen) zu schwach sind, die bedeutenden Verzögerungen beim Eisenbahn-Rangierbetrieb auszuhalten, wobei das Untergestell (1) des Wagens an jedem seiner Längsenden mit mindestens zwei die Verzögerungen beim Rangierbetrieb aufnahmefähigen Vertikalstäben (5) starr verbunden ist und der freie Abstand (D) zwischen zwei in Längsrichtung gegenüberliegenden, zusammengehörigen Vertikalstäben größer als die Gesamtlänge (L) der Ladung ist und diese Vertikalstäbe mit einem verschiebbaren Anschlagelement zum Festhalten durch Pressen desselben an die Ladung zusammenwirken, welcher Wagen dadurch gekennzeichnet ist,

— daß das Anschlagelement aus einer Mehrzahl von separaten, höhenmäßig in Gruppen von mindestens zwei Elementen auf den betreffenden Vertikalstäben verteilten Festlegeelementen (18, 19) besteht,

— daß diese Anschlag- und Festlegeelemente in die Vertikalstäbe einziehbar sind, damit die Vertikalstäbe in der Einziehposition eine Zentrierung der stirnseitigen Enden (13) (fixe Wände oder Türen) eines abnehmbaren Straßenfahrzeugaufbaus (6) von oben ermöglichen und sich die einziehbaren Anschlag- und Festlegeelemente (18, 19) in der Ausziehposition über die insbesondere die beim Rangieren auftretenden Stoßkräfte aufnehmenden Vertikalstäbe jeglicher Verformung des Straßenfahrzeugaufbaus entgegensetzen,

— und daß die einziehbaren Anschlag- und Festlegeelemente (18, 19) jedes Vertikalstabs miteinander verbunden sind (32, 35), wobei ihre gemeinsame Steuerung, ebenso wie jene der Elemente der anderen Vertikalstäbe, in selektiver Abhängigkeit der Bewegung des betreffenden abnehmbaren Aufbaus während des Absenkens desselben erfolgt.

2. Wagen nach Anspruch 1, dadurch gekennzeichnet, daß geneigte Rampen für eine Längs- (14) und/oder Quer-(15)Zentrierung zwischen den Widerstandselementen des Wagens und jenen des abnehmbaren Aufbaus eingesetzt sind, welche während des Absenkens desselben in Funktion treten.

3. Wagen nach Anspruch 1 oder 2, dadurch gekennzeichnet, daß die einziehbaren Anschlag- und Festlegeelemente jedes Vertikalstabs (5) durch schwenkbar am Vertikalstab montierte und eine geneigte Einziehposition sowie eine im wesentlichen rechtwinklige Blockierposition einnahmefähige Hebel (18, 19) gebildet sind, welche Hebel miteinander durch mindestens eine Kuppelstange (32, 35) und mit einem Steuerpedal (20, 21) durch eine Übertragungsstange (32, 42) verbunden sind, wobei das auskragende Ende (27, 40) des Pedals ständig in der Absenkbahn des abnehmbaren Aufbaus liegt.

4. Wagen nach Anspruch 3, dadurch gekennzeichnet, daß bei jedem Vertikalstab ein einziger Lenker (32) die kinematische Verbindung zwischen den Hebeln (18) und dem Pedal (20) sichert, wobei sich die Schwenkachsen (24, 29) der Hebel und des Pedals zwischen den in Funktion tretenden Enden (22, 27) derselben und den Anlenkachsen (33, 34) des Lenkers befinden und alle diese Achsen unter Bildung verformbarer Parallelogramme angeordnet sind.

5. Wagen nach Anspruch 3, dadurch gekennzeichnet, daß bei jedem Vertikalstab Kuppelstangen (35) zwei und zwei Hebel (19) zwischen ihren in Funktion tretenden Enden (33) und ihren Schwenkachsen (34) verbinden, wobei eine Übertragungsstange (42) das Steuerpedal (21) und einen der Hebel, ebenfalls zwischen ihren in Funktion tretenden Enden und ihren Schwenkachsen (34, 41), verbindet.

6. Wagen nach Anspruch 4 oder 5, dadurch gekennzeichnet, daß ein elastisches Element (35, 45) zwischen jedem Vertikalstab (5) und einem der Schwenkelemente (Hebel 18, 19 oder Pedal 20, 21) aufgehängt ist, um sie in geneigte Position bzw. Einziehposition für die Hebel zu bringen.

7. Wagen nach einem der Ansprüche 3 bis 6, dadurch gekennzeichnet, daß jedes stirnseitige Ende (13) des betreffenden abnehmbaren Aufbaus (6) vertikale (16) und horizontale (17) Verstärkungen umfaßt, wobei sich die Schwenkhebel (18, 19) jedes Vertikalstabs gegenüber einer vertikalen Verstärkung (16) befinden.

8. Wagen nach Anspruch 1, dadurch gekennzeichnet, daß der Gesamtabstand (E) seiner Langträger (2) geringer ist als der freie Abstand (d) zwischen den Längsträgern (10) des betreffenden abnehmbaren Aufbaus (6), so daß die Querträger (9) desselben auf den Langträgern unterhalb eines Niveaus aufliegen können, wobei die Längsträger zur Verrringerung des Eisenbahnlichtraumes Platz nehmen können.

## Claims

1. Flat waggon adapted to the transport of removable bodies of long distance lorries, of which the front ends (walls or doors) are too weak to withstand important braking decelerations of shunt yards, the frame (1) of the waggon being rigidly integral, at each of its longitudinal ends, with at least two upright members (5) capable of withstanding decelerations at the shunt yards, the free distance (D) between two longitudinally opposed conjugated upright members being greater than the overall length (L) of the load, said upright member cooperating with a movable abutment to encircle said load with pressure, said waggon being characterized:

— in that the abutment is constituted by a plurality of separate locking members (18, 19) distributed heightwise in groups of at least two members on said uprights,

— in that the abutment and locking members are retractable in the uprights so that in retracted position, said uprights enable the centering from the top of the front ends (13) (fixed walls or doors) of a removable body of a long distance lorry (6), and that in projected position, the removable abutment and locking members (18, 19) oppose via said uprights which support in particular the buffing stresses at the shunt yard, to any deformation of the body of long distance lorries,

— and in that said removable abutment and locking members (18, 19) of each upright are interconnected (32, 35), their joint control being, in the same way as that of the other members of the other uprights, selectively dependant on the actuation of the removable body in question during its descending movement.

2. Waggon according to claim 1, characterized in that inclined ramps for longitudinal (14) and/or transversal (15) centering, are interposed between the resisting elements of the waggon and those of the removable body to intervene during the descending movement thereof.

3. Waggon according to claim 1 or 2, characterized in that the removable abutment and locking members of each upright (5) are constituted by levers (18, 19) mounted for pivoting on the upright, and adapted to occupy an inclined retracted position, and a substantially perpendicular locking position, said levers being connected one to another, by at least one coupling rod (32, 35), and to a control pedal (20, 21) by a transmission rod (32, 42), of which pedal the projecting end (27, 40) is always situated on the descending path of the removable body.

4. Waggon according to claim 3, characterized in that for each upright, a single rod (32) ensures the kinematic connection between the levers (18) and the pedal (20), the pivoting axis (24, 29) of the levers and pedal being situated between the intervening ends (22, 27) of the latter and the rod pivoting axes (33, 34) of the rod, all said axes being arranged so as to constitute deformable parallelograms.

5. Waggon according to claim 3, characterized in that for each upright, coupling rods (35) connecting the levers (19) in pairs between their intervening ends (33) and their pivoting axes (34), a transmission rod (42) connecting the control pedal (21) to any one of the levers and also between their intervening ends and their pivoting axes (34, 41).

6. Waggon according to claim 4 or 5, characterized in that an elastic member (35, 45) is fastened between each upright (5) and one of the pivoting elements (levers 18, 19 or pedal 20, 21) to return them to the inclined position, or retracted position, for the levers.

7. Waggon according to any one of claims 3 to 6, characterized in that each front end (13) of said removable body (6) comprises vertical (16) and horizontal (17) stiffeners, the pivoting levers (18, 19) of each upright being situated opposite a vertical stiffener (16).

8. Waggon according to claim 1, characterized in that the overall (E) distance gap between its longitudinal sole bars (2) is smaller than the free distance (d) between the subframe (10) of said removable body (6), so that the sleepers (9) of the latter may rest on said sole bars below the level on which said subframes can rest to reduce the railway gauge.

Fig. 1

Fig. 2

Fig. 4

Fig. 5

Fig. 6

Fig. 3

Fig. 7

Fig. 8

Fig. 9